# EUROPEAN PATENT APPLICATION

(11) **EP 4 371 829 A1**
(43) Date of publication of application: **22.05.2024**
(21) Application number: 23201746.7
(22) Date of filing: 05.10.2023
(51) Int. Cl.: B60R 25/021

(54) **STEERING LOCK SYSTEM**

(30) Priority: 21.11.2022 JP 2022185783
(71) Applicant: Suzuki Motor Corporation, Hamamatsu-shi, Shizuoka 432-8611 (JP)
(72) Inventor: NAKAO, Taichi, SHIZUOKA, 432-8611 (JP)
(74) Representative: Plasseraud IP

(57) **Abstract**

A steering lock system (1) includes: a power supply configured to become an ON state when a vehicle is in a state capable of running; a latch circuit (15) configured to hold output of an ignition power-supply signal indicating the ON state or OFF state of an ignition power supply (5); a steering lock controller (8) configured to perform lock determination of a steering (2) of the vehicle and output a lock request signal for requesting lock of the steering (2) depending on a result of the lock determination; and a steering lock driver (7) configured to lock the steering (2) based on the lock request signal and the power-supply signal.

## Description

### BACKGROUND OF THE INVENTION

### Field of the Invention

Embodiments of the present invention relate to a steering lock system.

### Description of the Related Art

A steering lock system to be installed in a vehicle for anti-theft purposes is known. A conventional steering lock system includes a plurality of microcomputers that are installed in a vehicle and individually determine whether it is necessary to activate the steering lock or not, and locks the rotation of the steering shaft depending on the comparison results of the individual determinations of these microcomputers.

[Patent Document 1] JP 2013-010438 A

A known steering lock system includes: a sensor configured to output an alighting signal; another sensor configured to output a vehicle speed signal; and a plurality of microcomputers, each of which individually receives the outputs of the respective sensors and independently determines whether it is necessary to activate the steering lock or not. This conventional steering lock system uses two microcomputers for determining whether it is necessary to activate the steering lock or not. For example, one microcomputer receives the alighting signal outputted as a result of detecting the alighting state (i.e., the state in which the driver has gotten off the vehicle), and thereby determines whether it is necessary to activate the steering lock or not. The other microcomputer receives the vehicle speed signal outputted as a result of detecting the running state, and thereby determines whether it is necessary to activate the steering lock or not. The conventional steering lock system has redundancy in determining whether it is necessary to activate the steering lock or not, so as to prevent erroneous steering lock control during running of the vehicle. In other words, the conventional steering lock system determines whether the vehicle is stopped or not based on a plurality of signals outputted as a result of individually detecting the running state, and activates the steering lock depending on this determination result.

The conventional steering lock system provided with such a configuration achieves ASIL-D, which is the highest level of Automotive Safety Integrity Level (hereinafter simply referred to as "ASIL") defined by ISO 26262 standards in functional safety activities. The level of ASIL is classified into four stages including: A; B; C; and D. ASIL-A indicates the lowest degree of risk of hazards, and ASIL-D indicates the highest degree of risk of hazards. A level lower than ASIL-A is called ASIL-QM (Quality Management).

The conventional steering lock system uses the vehicle speed signal and a shift P signal as the plurality of signals for individually determining whether the vehicle is stopped or not. However, a vehicle with a manual transmission cannot output the shift P signal. Thus, in the vehicle with a manual transmission, a signal other than the shift P signal has to be obtained as a signal indicating the stopped state of the vehicle. However, only a few signals can achieve the safety level of ASIL-B, and the manufacturing cost increases in the case of separately installing a dedicated sensor.

Further, as the level of ASIL increases, the verification process of the software to be installed in the microcomputers increases, and man-hours of software development increase. Moreover, when at least ASIL-B safety level is required for each of the two independent microcomputers, the verification process doubles, and the software development burden also doubles.

### SUMMARY OF THE INVENTION

In view of the above-described circumstances, an object of the present invention is to provide a steering lock system that can: ensure safety by reducing the frequency of occurrence of failures due to product defects; be readily designed while satisfying the requirements of ISO 26262; and reduce the burden of verification.

To achieve the above object, an aspect of the present invention provides the steering lock system including: a power supply configured to become an ON state when a vehicle is in a state capable of running; a latch circuit configured to hold output of a power-supply signal indicating the ON state or OFF state of the power supply; a steering lock controller configured to perform lock determination of a steering of the vehicle and output a lock request signal for requesting lock of the steering depending on a result of the lock determination; and a steering lock driver configured to lock the steering based on the lock request signal and the power-supply signal.

To achieve the above object, an aspect of the present invention provides the steering lock system including: a latch circuit configured to hold output of a state determination signal indicating a running state or stopped state of a vehicle; a steering lock controller configured to perform lock determination of a steering of the vehicle and output a lock request signal for requesting lock of the steering depending on a result of the lock determination; and a steering lock driver configured to lock the steering based on the lock request signal and the state determination signal.

### EFFECT OF THE INVENTION

The present invention can provide a steering lock system that can: ensure safety by reducing the frequency of occurrence of failures due to product defects; be readily designed while satisfying the requirements of ISO 26262; and reduce the burden of verification.

### BRIEF DESCRIPTION OF THE DRAWINGS

In the accompanying drawings:
Fig. 1 is a block diagram illustrating a steering lock system according to one embodiment of the present invention;
Fig. 2 is a logic circuit diagram of a latch circuit controller of the steering lock system according to the embodiment of the present invention; and
Fig. 3 is a block diagram of the steering lock system of a second aspect according to the embodiment of the present invention.

### DETAILED DESCRIPTION

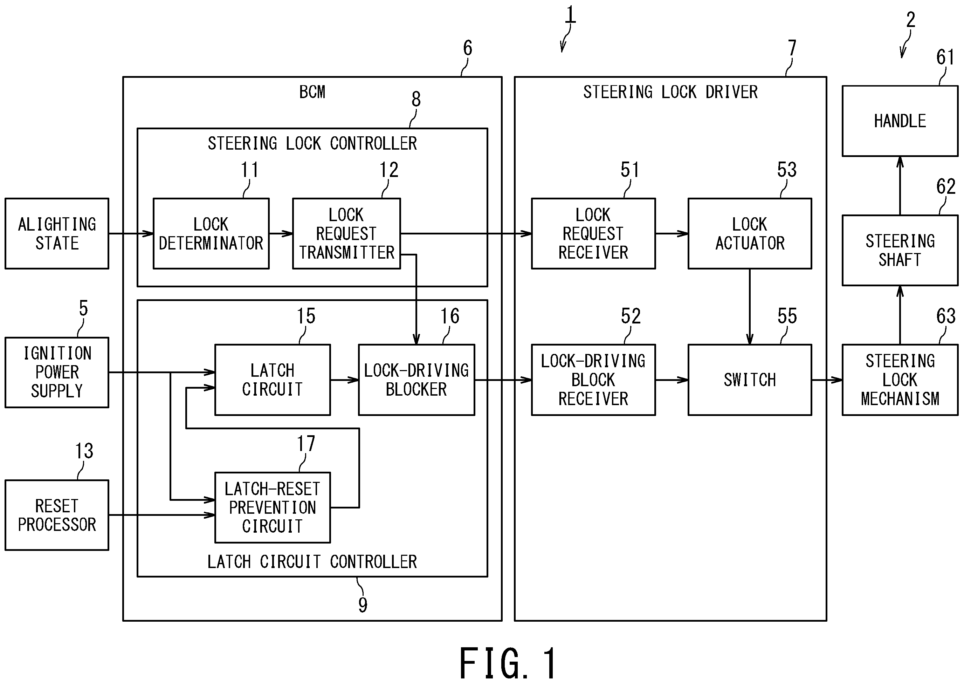

Hereinbelow, a steering lock system according to the present embodiment will be described by referring to Fig. 1 to Fig. 3. Note that the same reference signs are given to identical or equivalent components in each figure.

Fig. 1 is a block diagram of a steering lock system 1 according to one embodiment of the present invention.

As shown in Fig. 1, the steering lock system 1 according to the present embodiment locks its steering 2 in order to prevent vehicle theft when its vehicle engine (not shown) is stopped and required lock conditions are satisfied. The steering lock system 1 is also called a handle lock system. The steering lock system 1 includes: an ignition power supply 5 configured to start the vehicle (not shown); a body control module 6 (hereinafter referred to as "the BCM 6"); a steering lock driver 7; and the steering 2.

The BCM 6 includes an electronic circuit (not shown) that controls various vehicular functions such as lights, wipers, and door locks. In addition, the BCM 6 includes: a latch circuit controller 9; and a steering lock controller 8 that performs lock determination of the steering 2 (i.e., determination as to whether it is necessary to activate the steering lock or not) and outputs a lock request signal for requesting activation of the steering lock depending on the result of the lock determination.

The steering lock controller 8 includes: a lock determinator 11 configured to perform the lock determination of the steering 2; and a lock request transmitter 12 that outputs the lock request signal for requesting the steering lock driver 7 to lock the steering 2 depending on the result of the lock determination of the lock determinator 11. The steering lock controller 8 includes: a microcomputer configured to execute at least one program; and a memory storing the program that allows the microcomputer to receive an alighting signal outputted as a result of detecting an alighting state of a vehicle occupant and determine whether it is necessary to activate the steering lock or not. The "alighting state" is a state in which the vehicle occupant such as the driver has gotten off the vehicle.

The lock determinator 11 receives the alighting signal, which is the output signal from an alighting sensor (not shown) configured to detect the alighting state of the vehicle occupant, and performs the lock determination on the basis of this alighting signal, i.e., determines whether it is necessary to activate the steering lock or not. The alighting signal is a signal to be outputted by the alighting sensor when the alighting sensor determines that the alighting state is established. The alighting state is established when the vehicle occupant opens and closes the vehicle door at the time of alighting from the vehicle, after the engine stops from the operating state, for example. In the case of receiving this alighting signal, the lock determinator 11 determines that it is necessary to activate the steering lock.

The lock request transmitter 12 outputs the lock request signal for requesting activation of the steering lock to the steering lock driver 7 depending on the result of the lock determination of the lock determinator 11. Here, the lock request signal is assumed to be a binary signal that takes a value of 0 or 1. The lock request signal with a value of 1 is defined as a lock command, and the lock request signal with a value of 0 is defined as pre-lock command, for convenience of description. Of the two modes of the lock request signal, the lock command is a signal for requesting activation of the steering lock. For example, when the lock determinator 11 determines that it is necessary to activate the steering lock, the lock request transmitter 12 outputs the lock command to the steering lock driver 7.

The ignition power supply 5 is a power supply for operating the electrical components of various electrical systems by using the vehicle battery. The ignition power supply 5 becomes an ON state when supplying power to the electrical components of various electrical systems, and becomes an OFF state when it does not supply power to the electrical components of various electrical systems. In an EV (Electric Vehicle) that does not have an engine, the ignition power supply 5 corresponds to the ignition switch, i.e., the operation of a so-called start/stop switch. For example, when the ignition power supply 5 is in the OFF state, if the ignition switch is pressed twice without depressing the brake pedal, or if the brake pedal is depressed and the ignition switch is pressed once, the ignition power supply 5 transitions to the ON state.

For convenience of description, an ignition-power-supply signal is defined as a signal that indicates the ON state or OFF state of the ignition power supply 5 and is inputted from the ignition power supply 5 to the BCM 6. The ignition-power-supply signal is a binary signal corresponding to the ON state or OFF state of the ignition power supply 5. The ignition-power-supply signal may be a binary signal indicative of: the ON state when the ignition power supply 5 outputs a predetermined voltage; and the OFF state when the ignition power supply 5 does not output the predetermined voltage. The ignition-power-supply signal is assumed to take a value of 1 when the ignition power supply 5 is in the ON state, and is assumed to take a value of 0 when the ignition power supply 5 is in the OFF state.

When the alighting signal is inputted in a locked state of the vehicular power supply (i.e., in the state where both the ignition power supply 5 and an accessory power supply (not shown) are in the OFF state), the reset processor 13 outputs a reset signal. The reset signal is a binary signal that takes a value of 0 or 1. The reset signal is assumed to take a value of 1 when the ignition-power-supply signal takes a value of 0 (i.e., OFF state), and is assumed to take a value of 0 when the ignition-power-supply signal takes a value of 1 (i.e., ON state). It is preferred that the reset processor 13 temporarily outputs the reset signal with a value of 1 at the alighting timing in order to avoid battery consumption.

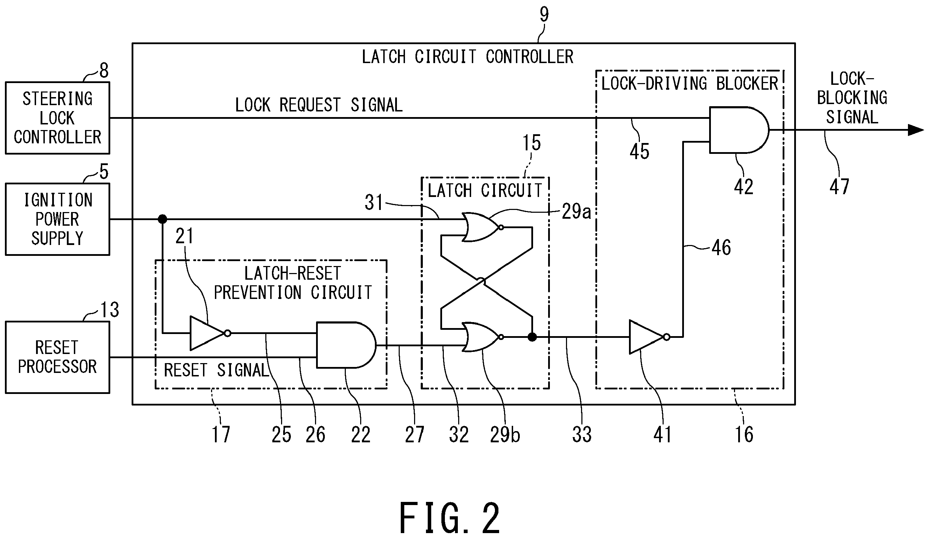

Fig. 2 is a logic circuit diagram of the latch circuit controller 9 of the steering lock system 1 according to the embodiment of the present invention.

As shown in Fig. 2 in addition to Fig. 1, the latch circuit controller 9 of the steering lock system 1 according to the present embodiment includes: a latch circuit 15 configured to hold the output of the ignition-power-supply signal indicating the ON state or OFF state of the ignition power supply 5; and a lock-driving blocker 16 configured to perform block processing in which the lock request signal for locking the steering 2 is blocked on the basis of the output of the latch circuit 15 and the output of the lock request transmitter 12.

In addition, the latch circuit controller 9 may include a latch-reset prevention circuit 17 that prevents reset of the output state of the latch circuit 15.

First, the reset processor 13 outputs the reset signal with a value of 1 intended to reset the output of the latch circuit 15 from the output indicating the ON state of the ignition-power-supply signal to the output indicating the OFF state. In other words, when the alighting signal is inputted in the above-described locked state of the vehicular power supply (i.e., in the state where both the ignition power supply 5 and the accessory power supply are in the OFF state), the reset signal with a value of 1 from the reset processor 13 is outputted in order to reset the output of the latch circuit 15 from the output indicating the ON state of the ignition-power-supply signal to the output indicating the OFF state. For example, when the ignition switch is pressed once without depressing the brake pedal in the state where the accessory power supply is in the OFF state, the accessory power supply transitions to the ON state. In addition, when the brake pedal is depressed and the ignition switch is pressed once, the accessory power supply transitions to the ON state along with the transition of the ignition power supply 5 to the ON state.

The latch-reset prevention circuit 17 is provided between the reset processor 13 and the latch circuit 15. The latch-reset prevention circuit 17 prevents the reset signal with a value of 1 to be outputted by the reset processor 13 from being inputted to the latch circuit 15 when the ignition-power-supply signal takes a value of 1 (ON state).

The latch-reset prevention circuit 17 includes: a NOT circuit 21 configured to negate the ignition-power-supply signal to be inputted from the ignition power supply 5; and an AND circuit 22 configured to output the logical product of the output of the NOT circuit 21 and the reset signal, which is the output of the reset processor 13.

The AND circuit 22 has two input terminals 25 and 26 and one output terminal 27. The first input terminal 25 of the AND circuit 22 is connected to the output of the ignition power supply 5 via the NOT circuit 21. The second input terminal 26 of the AND circuit 22 is connected to the reset processor 13. The output terminal 27 of the AND circuit 22 is connected to the latch circuit 15. The output of the AND circuit 22 is the output of the latch-reset prevention circuit 17.

First, when the reset signal with a value of 0 intended not to reset the latch circuit 15 is inputted from the reset processor 13 to the latch-reset prevention circuit 17, the second input terminal 26 of the AND circuit 22 receives a value of 0, and the latch-reset prevention circuit 17 always outputs a value of 0 regardless of the value of the ignition-power-supply signal to be inputted from the ignition power supply 5. This is because the AND circuit 22 outputs the logical product. In other words, when the reset processor 13 outputs the reset signal with a value of 0 intended not to reset the latch circuit 15, the latch-reset prevention circuit 17 always outputs a value of 0.

Conversely, when the reset signal with a value of 1 intended to reset the latch circuit 15 is inputted from the reset processor 13 to the latch-reset prevention circuit 17, the second input terminal 26 of the AND circuit 22 receives a value of 1, and the latch-reset prevention circuit 17 changes its output depending on the value of the ignition-power-supply signal to be inputted from the ignition power supply 5. This is because the AND circuit 22 outputs the logical product.

Next, a description will be given of the case where: the ignition-power-supply signal with a value of 1 indicating the ON state is inputted from the ignition power supply 5 to the latch-reset prevention circuit 17; and the reset signal with a value of 1 intended to reset the latch circuit 15 is inputted from the reset processor 13 to the latch-reset prevention circuit 17. In this case, the ignition-power-supply signal is inverted by the NOT circuit 21. Thus, the first input terminal 25 of the AND circuit 22 receives a value of 0, and the second input terminal 26 receives a value of 1. Since the AND circuit 22 outputs the logical product, the latch-reset prevention circuit 17 outputs a value of 0. In other words, even when the reset processor 13 outputs the reset signal with a value of 1 intended to reset the latch circuit 15, in the case where the ignition-power-supply signal with a value of 1 indicating the ON state is outputted, the latch-reset prevention circuit 17 outputs a value of 0.

Next, a description will be given of the case where: the ignition-power-supply signal with a value of 0 indicating the OFF state is inputted from the ignition power supply 5 to the latch-reset prevention circuit 17; and the reset signal with a value of 1 intended to reset the latch circuit 15 is inputted from the reset processor 13 to the latch-reset prevention circuit 17. In this case, the ignition-power-supply signal is inverted by the NOT circuit 21. Thus, the first input terminal 25 of the AND circuit 22 receives a value of 1, and the second input terminal 26 receives a value of 1. Since the AND circuit 22 outputs the logical product, the latch-reset prevention circuit 17 outputs a value of 1. In other words, when the reset processor 13 outputs the reset signal with a value of 1 intended to reset the latch circuit 15 and the ignition-power-supply signal with a value of 0 indicating the OFF state is outputted, the latch-reset prevention circuit 17 outputs a value of 1.

That is, when the ignition-power-supply signal takes a value of 0 (OFF state) and the reset signal outputted from the reset processor 13 takes a value of 1 intended to reset the latch circuit 15, the latch-reset prevention circuit 17 allows the reset signal with a value of 1 intended to reset the latch circuit 15 to pass. Otherwise, the latch-reset prevention circuit 17 outputs a value of 0 intended not to reset the latch circuit 15. In other words, when the ignition-power-supply signal takes a value of 1 (ON state), the latch-reset prevention circuit 17 always outputs a value of 0 intended not to reset the latch circuit 15.

The latch circuit 15 includes a pair of NOR circuits 29a and 29b connected crosswise. Each of the NOR circuits 29a and 29b outputs the NOR, i.e., the inverse of the logical sum of all the inputs. The latch circuit 15 includes an S input terminal 31, an R input terminal 32, and a Q output terminal 33. The S input terminal 31 is directly connected to the ignition power supply 5. The R input terminal 32 is connected to the latch-reset prevention circuit 17. The Q output terminal 33 is connected to the lock-driving blocker 16. The ignition-power-supply signal to be outputted by the ignition power supply 5 is inputted to the S input terminal 31 of the latch circuit 15. Thus, the ignition-power-supply signal is desirably a binary signal that is appropriate for the input to the latch circuit 15.

Next, a description will be given of the output of latch circuit 15 when the latch-reset prevention circuit 17 outputs a value of 0 intended not to reset the latch circuit 15.

When the ignition-power-supply signal being the input to the S input terminal 31 transitions to a value of 1 (ON state) while the output of the latch-reset prevention circuit 17 as the input to the R input terminal 32 is a value of 0, the output of the Q output terminal 33 transitions to a value of 1. That is, the output of the latch circuit 15 becomes a value of 1. Even after the ignition-power-supply signal being the input to the S input terminal 31 returns to the value of 0 (OFF state), the latch circuit 15 maintains the output of the Q output terminal 33 at the value of 1. In other words, when the ignition power supply 5 is in the ON state and the latch-reset prevention circuit 17 blocks the reset signal, the latch circuit 15 outputs and holds a value of 1 indicating the ON state of the ignition power supply 5.

Thus, when a value of 0 intended not to reset the latch circuit 15 is inputted from the latch-reset prevention circuit 17 and the ignition-power-supply signal with a value of 1 (ON state) is temporarily inputted, the latch circuit 15 outputs and holds a value of 1 indicating the ON state of the ignition power supply 5 regardless of the value of the ignition-power-supply signal. When the ignition-power-supply signal indicates the OFF state and the reset signal outputted from the reset processor 13 takes a value of 1 intended to reset the latch circuit 15, the latch-reset prevention circuit 17 outputs the reset signal with a value of 1 intended to reset the latch circuit 15. In other words, even when the ignition-power-supply signal indicates the OFF state, unless the reset processor 13 outputs the reset signal, the latch circuit 15 outputs and holds a value of 1 indicating the ON state of the ignition power supply 5.

Next, a description will be given of the output of the latch circuit 15 when the ignition power supply 5 outputs a value of 0 indicating the OFF state.

When the output of the latch-reset prevention circuit 17 being the input to the R input terminal 32 transitions to a value of 1 intended to reset the latch circuit 15 while the ignition-power-supply signal being the input to the S input terminal 31 is a value of 0 (OFF state), the output of the Q output terminal 33 transitions to a value of 0. When the ignition-power-supply signal takes a value of 0 (OFF state) and the reset signal outputted from the reset processor 13 takes a value of 1 intended to reset the latch circuit 15, the latch-reset prevention circuit 17 allows the reset signal with a value of 1 intended to reset the latch circuit 15 to pass. Otherwise, the latch-reset prevention circuit 17 outputs a value of 0 intended not to reset the latch circuit 15. In other words, Under the locked state of the vehicular power supply where the ignition power supply 5 is in the OFF state and the reset signal is also outputted, the latch circuit 15 is reset from the state of outputting a value of 1 indicating the ON state of the ignition power supply 5 so as to output and hold a value of 0 indicating the OFF state. Thus, when the ignition power supply 5 outputs the ignition-power-supply signal with a value of 0 (OFF state), the reset signal with a value of 1 to be outputted by the reset processor 13 resets the output value of 1 of the Q output terminal 33 (i.e., the value of 1 (ON state) of the ignition-power-supply signal held by the latch circuit 15) to the output value of 0 (OFF state).

In addition, when the output of the latch-reset prevention circuit 17 as the input to the R input terminal 32 transitions to a value of 0 while the ignition-power-supply signal being the input to the S input terminal 31 is a value of 0 (OFF state), the output of the Q output terminal 33 does not change. In other words, the output of the latch circuit 15 is maintained regardless of the output of the latch-reset prevention circuit 17. When the latch circuit 15 outputs a value of 1 indicating the ON state of the ignition power supply 5, this state is maintained. When the latch circuit 15 outputs a value of 0 indicating the OFF state of the ignition power supply 5, this state is also maintained.

As described above, under the state where the latch circuit 15 holds a value of 1 indicating the ON state of ignition power supply 5, even if the reset processor 13 erroneously transmits the reset signal, the latch-reset prevention circuit 17 prevents unintended transition of the latch circuit 15.

The latch circuit controller 9 compares two signals, i.e., compares the reset signal with the ignition-power-supply signal, and prevents unintended transition of the output state of the latch circuit 15 due to input of the unintended reset signal. Hence, the latch circuit controller 9 prevents malfunction of the latch circuit 15 that holds the output of the ON state or OFF state of the ignition power supply 5, and thus can reduce malfunction of the lock control of the steering 2, which is the subsequent processing, so as to improve safety.

It is not preferred to simultaneously input a value of 1 to both the S input terminal 31 and the R input terminal 32 because the output of the latch circuit 15 becomes unstable and lacks stability.

In order to avoid simultaneous input of both the ignition-power-supply signal with a value of 1 to the R input terminal 32 and the reset signal with a value of 1 to the S input terminal 31, the latch-reset prevention circuit 17 is connected to the R input terminal 32 instead of the S input terminal 31.

The input side of the lock-driving blocker 16 is connected to the output of the latch circuit 15 and the output of the lock request transmitter 12 of the steering lock controller 8. On the basis of the ignition-power-supply signal to be outputted by the latch circuit 15 and the lock request signal to be outputted by the lock request transmitter 12, the lock-driving blocker 16 switches whether or not to output the binary signal indicating the ON state or OFF state of the ignition-power-supply signal to the steering lock driver 7.

The lock-driving blocker 16 includes: a second NOT circuit 41 configured to negate the output of the latch circuit 15; and a second AND circuit 42 configured to output the logical product of the output of the second NOT circuit 41 and the lock request signal, which is the output of the lock request transmitter 12.

The second AND circuit 42 has two input terminals 45 and 46 and one output terminal 47. The first input terminal 45 of the second AND circuit 42 is connected to the lock request transmitter 12. The second input terminal 46 of the second AND circuit 42 is connected via the second NOT circuit 41 to the output of the latch circuit 15. The output terminal 47 of the second AND circuit 42 is connected to the steering lock driver 7. The output of the second AND circuit 42 is the output of the lock-driving blocker 16.

First, when the lock request transmitter 12 outputs the lock request signal with a value of 0 indicating the pre-lock command, a value of 0 is inputted to the first input terminal 45 of the second AND circuit 42, and the lock-driving blocker 16 always outputs a value of 0 regardless of the output value of the latch circuit 15. This is because the second AND circuit 42 outputs the logical product.

Conversely, when the lock request transmitter 12 outputs the lock request signal with a value of 1 indicating the lock command, a value of 1 is inputted to the first input terminal 45 of the second AND circuit 42, and the lock-driving blocker 16 changes its output depending on the output value of the latch circuit 15. This is because the second AND circuit 42 outputs the logical product.

Next, a description will be given of the case where the lock request transmitter 12 outputs a value of 1 indicating the lock command and the latch circuit 15 outputs a value of 1 indicating the ON state of the ignition power supply 5. In this case, the second NOT circuit 41 inverts the output of the latch circuit 15. Thus, the first input terminal 45 of the second AND circuit 42 receives a value of 1, and the second input terminal 46 receives a value of 0. Since the second AND circuit 42 outputs the logical product, the lock-driving blocker 16 outputs a value of 0.

Next, a description will be given of the case where the lock request transmitter 12 outputs a value of 1 indicating the lock command and the latch circuit 15 outputs a value of 0 indicating the OFF state of the ignition power supply 5. In this case, the second NOT circuit 41 inverts the output of the latch circuit 15. Thus, the first input terminal 45 of the second AND circuit 42 receives a value of 1, and the second input terminal 46 receives a value of 1. Since the second AND circuit 42 outputs the logical product, the lock-driving blocker 16 outputs a value of 1.

That is, when the lock request signal takes a value of 1 indicating the lock command and the ignition-power-supply signal takes a value of 0 indicating the OFF state of the ignition power supply 5, the lock-driving blocker 16 allows the lock command with a value of 1 intended to activate the steering lock to pass. Otherwise, the lock-driving blocker 16 allows the pre-lock command with a value of 0 intended not to activate the steering lock to pass. In other words, when the output conditions of the pre-lock command are satisfied in the steering lock controller 8, regardless of the output of the latch circuit 15, the lock-driving blocker 16 allows the pre-lock command with a value of 0 intended not to activate the steering lock to pass. When the latch circuit 15 holds a value of 1 indicating the ON state of the ignition power supply 5, regardless of the output of the steering lock controller 8, the lock-driving blocker 16 outputs the pre-lock command with a value of 0 intended not to activate the steering lock. In other words, when the latch circuit 15 holds a value of 1 indicating the ON state of the ignition power supply 5, the lock-driving blocker 16 blocks the output of the steering lock controller 8.

The output of the lock-driving blocker 16 is hereinafter referred to as a lock-blocking signal. The lock-blocking signal is a binary signal that takes a value of 0 or 1. The lock-blocking signal with a value of 1 indicates the lock command intended to activate the steering lock, and the lock-blocking signal with a value of 0 indicates the pre-lock command intended not to activate the steering lock.

Returning to Fig. 1, the steering lock driver 7 includes: a lock request receiver 51 configured to receive the lock request signal to be outputted by the steering lock controller 8; a lock-driving block receiver 52 configured to receive the lock-blocking signal to be outputted by the latch circuit controller 9; a lock actuator 53 configured to activate the steering lock (i.e., actuate locking of the steering 2) on the basis of the output of the lock request receiver 51; and a switch 55 configured to block activation of the steering lock of the steering 2 performed by the lock actuator 53 on the basis of the output of the lock-driving block receiver 52.

The lock request receiver 51 receives the lock request signal outputted by the lock request transmitter 12 of the steering lock controller 8, outputs a steering-lock activation request to the lock actuator 53 when the lock request signal indicates the lock command, and outputs a steering-lock deactivation request to the lock actuator 53 when the lock request signal indicates the pre-lock command.

When the steering-lock activation request is inputted from the lock request receiver 51, the lock actuator 53 outputs a signal for activating the steering lock or supplies power for activating the steering lock.

On the basis of the command from the lock-driving block receiver 52, the switch 55 switches its circuit between a state of allowing the signal to be outputted from the lock actuator 53 toward the steering 2 to pass and a state of blocking this signal, or switches its circuit between a state of supplying electric power and a state of blocking electric power.

The lock-driving block receiver 52 receives the lock-blocking signal outputted by the lock-driving blocker 16 of the latch circuit controller 9. When the lock-blocking signal indicates the lock command, the lock-driving block receiver 52 turns on the switch 55 so as to allow passing of the signal to be outputted toward the steering 2 or so as to allow supply of power. When the lock-blocking signal indicates the pre-lock command, the lock-driving block receiver 52 turns off the switch 55 so as to block the signal to be outputted toward the steering 2 or to block the power supply.

The steering 2 includes: a handle 61 for the vehicle occupant to steer the vehicle; a steering shaft 62 configured to rotate integrally with the handle 61; and a steering lock mechanism 63 configured to lock the steering 2 by restricting rotation of the steering shaft 62.

The steering lock mechanism 63 locks (restrains) the steering 2 by the signal outputted from the lock actuator 53 or by the power supplied from the lock actuator 53.

The steering lock mechanism 63 includes: a driving motor (not shown) that is driven by the signal to be outputted by the lock actuator 53 or is driven by the power to be supplied from the lock actuator 53; and a lock bar (not shown) that is moved by the driving motor, for example. The outer peripheral surface of the steering shaft 62 has a recess into which the lock bar can be fitted. When both the output of the steering lock controller 8 and the output of the latch circuit controller 9 indicate the lock command, the driving motor operates, and the lock bar moves in the direction toward the steering shaft 62 in conjunction with the operation of the driving motor so as to be fitted into (i.e., interdigitated with) the recess. The lock bar fitted into the recess prevents rotation of the steering shaft 62 and thereby locks the handle 61. In the case of unlocking the steering 2, the driving motor is driven in such a manner that the lock bar fitted into the recess moves in the direction away from the recess.

Next, another aspect of the steering lock system 1 according to the present embodiment will be described. In the steering lock system 1A of the second aspect, the same components as in the steering lock system 1 of the above-described first aspect are denoted by the same reference signs, and duplicate description is omitted.

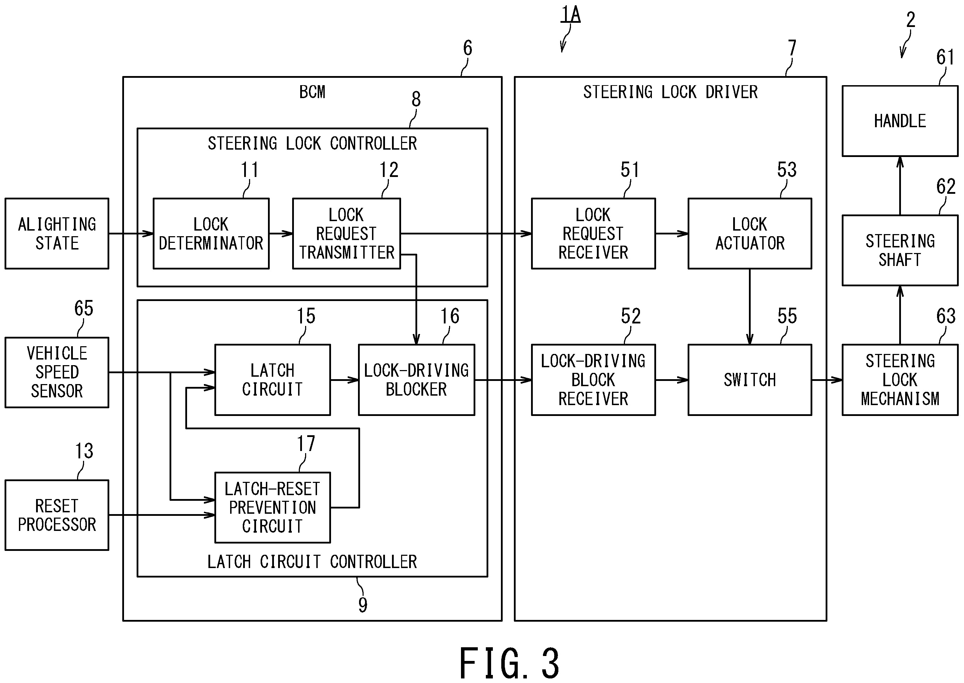

Fig. 3 is a block diagram of the steering lock system 1A of the second aspect according to the embodiment of the present invention.

As shown in Fig. 3, the steering lock system 1A of the second aspect according to the present embodiment (hereinafter simply referred to as "the steering lock system 1A") outputs a state determination signal received from the vehicle speed sensor 65 to the latch circuit controller 9, instead of the ignition-power-supply signal to be outputted by the ignition power supply 5 of the steering lock system 1 of the first aspect, for example.

The state determination signal is a binary signal corresponding to a running state or stopped state of the vehicle. For example, when the vehicle speed sensor 65 outputs a running speed larger than a value of 0, the state determination signal indicates the running state (i.e., the state in which the vehicle is in motion). When the vehicle speed sensor 65 outputs the running speed with a value of 0, the state determination signal indicates the stopped state. The state determination signal is assumed to take a value of 1 when the vehicle is in the running state, and is assumed to take a value of 0 when the vehicle is in the stopped state.

In other words, the state determination signal with a value of 1 indicating the running state of the vehicle corresponds to the ignition-power-supply signal with a value of 1 indicating the ON state of the ignition power supply 5 of the steering lock system 1 of the first aspect. Conversely, the state determination signal with a value of 0 indicating the stopped state of the vehicle corresponds to the ignition-power-supply signal with a value of 0 indicating the OFF state of the ignition power supply 5 of the steering lock system 1 of the first aspect.

When the state determination signal takes a value of 1 (running state), the latch circuit 15 outputs and holds a value of 1 indicating the running state of the vehicle regardless of the value of the reset signal. Under the state where the latch circuit 15 holds a value of 1 indicating the running state of the vehicle, even if the reset processor 13 erroneously transmits the reset signal, the latch-reset prevention circuit 17 prevents unintended transition of the latch circuit 15. In other words, the latch circuit controller 9 of the steering lock system 1A operates in the same manner as the latch circuit controller 9 of the steering lock system 1 of the first aspect by the state determination signal, which replaces the ignition-power-supply signal of the first aspect.

Thus, the latch circuit controller 9 of the steering lock system 1A compares the two signals, i.e., compares the reset signal with the state determination signal so as to prevent unintended transition of the output state of the latch circuit 15 due to input of the unintended reset signal. Hence, the latch circuit controller 9 prevents malfunction of the latch circuit 15 configured to maintain the output of the running or stopped state of the vehicle, and thereby can reduce malfunction of lock control of the steering 2, which is the subsequent processing, so as to improve safety.

The steering lock system 1 according to the present embodiment introduces the idea that the vehicle is running if the ignition power supply 5 is in the ON state. Based on such idea, the steering lock system 1 provides a limit that only when the ignition power supply 5 is in the ON state, the vehicle condition is required to achieve the safety level of ASIL-D so as to achieve the safety goal of preventing activation of the steering lock during running of the vehicle. Thus, in the steering lock system 1 according to the present embodiment, the signal (detection value) for determining whether the vehicle is running or stopped can be acquired as the signal (ignition-power-supply signal) to be outputted by the ignition power supply 5 that is generally provided in every vehicle. In this case, it is preferred that ASIL-QM is applied as the required safety level of the ignition switch (not shown) configured to switch the ignition power supply 5 to the ON state or the OFF state.

For this reason, during running of the vehicle, the steering lock system 1 according to the present embodiment holds the ON state of the ignition power supply 5 by the latch circuit 15. Even if a failure occurs in the output circuit of the ignition-power-supply signal including the ignition switch that accidentally changes the indication of the ignition-power-supply signal to become the OFF state, the latch circuit 15 maintains the ON state of the ignition power supply 5 during running of the vehicle. Hence, the steering lock system 1 can maintain the state of prohibiting activation of the steering lock during running of the vehicle, and consequently, achieve the safety goal of preventing the steering 2 from being locked during running of the vehicle.

Thus, the steering lock system 1 achieves the safety level, which is ensured by microcomputer control in the conventional steering lock system, by using a circuit (latch circuit 15) composed only of elements that do not require software, and consequently, reduces the number of microcomputers required to achieve the safety goal, and also reduces software development man-hours. Since the steering lock system 1 has a simple hardware configuration in which the number of required microcomputers is reduced, the steering lock system 1 can reduce the failure rate compared to the conventional steering lock system that requires a large number of microcomputers, and can readily enhance the safety level. This effect of reduction in failure rate facilitates achievement in a high safety level like ASIL-D, and can contribute to reduction in number of parts in the entire steering lock system 1 and reduction in installation space of the system. Further, the steering lock controller 8 may include a program executed by a microcomputer that determines locking prohibition of the steering 2 during running of the vehicle and commands the steering lock driver 7 to prevent activation of the steering lock during running of the vehicle. In other words, the latch circuit controller 9 may share the safety goal of preventing activation of the steering lock during running of the vehicle with the program executed in the steering lock controller 8 or may independently ensure this safety goal.

The safety goal of preventing activation of the steering lock during running of the vehicle is a concept that includes the ignition power supply 5 in the OFF state. However, the risk and probability of events occurring while the ignition power supply 5 is in the OFF state and the vehicle is running are extremely low compared to the risk and probability of events occurring while the ignition power supply 5 is in the ON state and the vehicle is running. For this reason, only when the ignition power supply 5 is in the ON state, the steering lock system 1 according to the present embodiment ensures the safety goal of preventing activation of the steering lock during running of the vehicle at a high safety level like ASIL-D. When the ignition power supply 5 is in the OFF state, the safety goal of preventing activation of the steering lock during running of the vehicle can be achieved at a lower level than ASIL-D, for example, ASIL-B.

In addition, the steering lock system 1 according to the present embodiment locks the steering 2 when the ignition-power-supply signal to be held by the latch circuit 15 indicates the OFF state and the lock request signal indicates the lock command. In other words, the steering lock system 1 can avoid activation of the steering lock during running of the vehicle at an extremely high safety level. The latch circuit 15 of the steering lock system 1 is reset to the state of the pre-lock command, i.e., the state where the steering 2 is not locked, in the cases as follows: in a case where the ignition-power-supply signal to be held by the latch circuit 15 indicates the OFF state and the lock request signal indicates the pre-lock command; in a case where the ignition-power-supply signal to be held by the latch circuit 15 indicates the ON state and the lock request signal indicates the lock command; or in a case where the ignition-power-supply signal to be held by the latch circuit 15 indicates the ON state and the lock request signal indicates the pre-lock command.

Further, the steering lock system 1 according to the present embodiment includes the reset processor 13 configured to output the reset signal that resets the ON state of the ignition-power-supply signal to be held by the latch circuit to the OFF state. Thus, while achieving the safety goal of preventing activation of the steering lock during running by maintaining the state of prohibiting activation of the steering lock during running, the steering lock system 1 can reset the ON state of the ignition-power-supply signal to be held by the latch circuit to the OFF state by using the reset processor 13 so as to lock the steering 2 when the vehicle is not running.

Further, the steering lock system 1 according to the present embodiment includes the reset processor 13 configured to temporarily output the reset signal when the alighting state is established. In other words, the reset processor 13 does not continue outputting the reset signal when the alighting state is established. Hence, while achieving the safety goal of preventing activation of the steering lock during running of the vehicle, the steering lock system 1 can reduce battery consumption caused by the reset processor 13 continuing to output the reset signal.

Moreover, the steering lock system 1 according to the present embodiment includes the latch-reset prevention circuit 17 that prevents the reset signal to be outputted by the reset processor 13 from being inputted to the latch circuit 15 when the ignition-power-supply signal indicates the ON state. Thus, even if the reset processor 13 accidentally or unintentionally outputs the reset signal with a value of 1 due to a failure, the steering lock system 1 can continue to maintain the ON state of the ignition power supply 5 to be held by the latch circuit 15.

Furthermore, the steering lock system 1 according to the present embodiment includes the latch-reset prevention circuit 17 that outputs the reset signal to the latch circuit 15 when the ignition-power-supply signal indicates the OFF state. Hence, the steering lock system 1 can reset the latch circuit 15 and lock the steering 2 only when the ignition-power-supply signal indicates the OFF state by which the vehicle is presumed to be stopped.

The steering lock system 1 may hold the ON state and OFF state of the accessory power supply by using the latch circuit 15, instead of holding the ON state and OFF state of the ignition power supply 5. Aside from the ignition power supply 5 and the accessory power supply, the steering lock system 1 may have the latch circuit 15 hold the state of the power-supply in a manner where the vehicle can run indicates the ON state and where the vehicle cannot run indicates the OFF state. In this case, the reset processor 13 outputs the reset signal with a value of 1 intended to reset the output of the latch circuit 15 from the output indicating the ON state of the power supply to the output indicating the OFF state. In other words, the reset signal with a value of 1 is outputted from the reset processor 13 when the alighting signal is inputted under the OFF state of the power supply.

In addition, the steering lock system 1A of the second aspect acquires a signal (detection value) for determining whether the vehicle is in the state of running or stopped by acquiring a signal (i.e., state determination signal) to be outputted by the vehicle speed sensor 65 generally provided in every vehicle. Thus, the steering lock system 1A of the second aspect has the same effects as the steering lock system 1 of the first aspect.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### REFERENCE SIGNS LIST

- 1, 1A: steering lock system
- 2: steering
- 5: ignition power supply
- 6: body control module (BCM)
- 7: steering lock driver
- 8: steering lock controller
- 9: latch circuit controller
- 11: lock determinator
- 12: lock request transmitter
- 13: reset processor
- 15: latch circuit
- 16: lock-driving blocker
- 17: latch-reset prevention circuit
- 21: NOT circuit
- 22: AND circuit
- 25: first input terminal
- 26: second input terminal
- 27: output terminal
- 29a, 29b: NOR circuit
- 31: S input terminal
- 32: R input terminal
- 33: Q output terminal
- 41: second NOT circuit
- 42: second AND circuit
- 45: first input terminal
- 46: second input terminal
- 47: output terminal
- 51: lock request receiver
- 52: lock-driving block receiver
- 53: lock actuator
- 55: switch
- 61: handle
- 62: steering shaft
- 63: steering lock mechanism
- 65: vehicle speed sensor

## Claims

1. A steering lock system comprising:
a power supply configured to become an ON state when a vehicle is in a state capable of running;
a latch circuit configured to hold output of a power-supply signal indicating the ON state or OFF state of the power supply;
a steering lock controller configured to
perform lock determination of a steering of the vehicle and
output a lock request signal for requesting lock of the steering depending on a result of the lock determination; and
a steering lock driver configured to lock the steering based on the lock request signal and the power-supply signal.

2. The steering lock system according to claim 1,
wherein the steering lock driver is configured to lock the steering when the power-supply signal to be held by the latch circuit indicates the OFF state and the lock request signal indicates a lock command, and
wherein the steering lock driver does not lock the steering: when the power-supply signal to be held by the latch circuit indicates the OFF state and the lock request signal indicates pre-lock command; when the power-supply signal to be held by the latch circuit indicates the ON state and the lock request signal indicates the lock command; or when the power-supply signal to be held by the latch circuit indicates the ON state and the lock request signal indicates the pre-lock command.

3. The steering lock system according to claim 1 or claim 2, further comprising a reset processor configured to output a reset signal that resets the ON state of the power-supply signal to be held by the latch circuit to the OFF state.

4. The steering lock system according to claim 3, wherein the reset processor is configured to temporarily output the reset signal when an alighting state is established.

5. The steering lock system according to claim 3 or claim 4, further comprising a latch-reset prevention circuit that is provided between the reset processor and the latch circuit and prevents the reset signal outputted by the reset processor from being inputted to the latch circuit when the power-supply signal indicates the ON state.

6. The steering lock system according to claim 5, wherein the latch-reset prevention circuit is configured to output the reset signal to the latch circuit when the power-supply signal indicates the OFF state.

7. A steering lock system comprising:
a latch circuit configured to hold output of a state determination signal indicating a running state or stopped state of a vehicle;
a steering lock controller configured to
perform lock determination of a steering of the vehicle and
output a lock request signal for requesting lock of the steering depending on a result of the lock determination; and
a steering lock driver configured to lock the steering based on the lock request signal and the state determination signal.
